# EUROPÄISCHE PATENTSCHRIFT

(11) **EP 1 526 301 B1**
(45) Veröffentlichungstag und Bekanntmachung des Hinweises auf die Patenterteilung: **21.06.2006**
(21) Anmeldenummer: 04023129.2
(22) Anmeldetag: 29.09.2004
(51) Int. Cl.: F16F 9/02, B60N 2/22

(54) **Längenverstellbare Druckfeder sowie Sitz mit einer derartigen Druckfeder**
Compression spring with adjustable length and seat with such a spring
Ressort de compression avec une longueur réglable et siège avec un tel ressort

(30) Priorität: 22.10.2003 DE 10349157
(43) Veröffentlichungstag der Anmeldung: 27.04.2005
(73) Patentinhaber: SUSPA Holding GmbH, 90518 Altdorf (DE)
(72) Erfinder: Knaust, Holger, 92245 Kümmersbruck (DE); Knapp, Rainer, 92364 Deining (DE); Böhm, Walter, 90537 Feucht (DE)
(74) Vertreter: Hofmann, Matthias

(56) Entgegenhaltungen:
- EP-A- 1 124 077
- EP-A- 1 288 525
- DE-A1- 3 924 309
- US-A- 4 844 392
- PATENT ABSTRACTS OF JAPAN Bd. 018, Nr. 006 (M-1537), 7. Januar 1994 (1994-01-07) -& JP 05 248469 A (KAYABA IND CO LTD), 24. September 1993 (1993-09-24)

## Beschreibung

Die Erfindung betrifft eine längenverstellbare Druckfeder nach dem Oberbegriff des Anspruchs 1. Ferner betrifft die Erfindung einen Sitz mit einer derartigen Druckfeder.

Eine derartige blockierbare Druckfeder ist bekannt aus der EP 1 288 525 A2. Dort sind in der Betätigungs-Überströmverbindung zwischen den beiden Teil-Gehäuseräumen in Reihe zwei Ventile angeordnet. Eines der beiden ist das betätigbare Ventil mit dem Ventilstift im Sinne des Oberbegriffs des Anspruchs 1. Das zweite Ventil ist ein Lastschaltventil, welches unabhängig von der Schaltstellung des betätigbaren Ventils die gesamte Betätigungs-Überströmverbindung blockiert. Durch Druckbeaufschlagung lässt sich das Lastschaltventil bei geöffnetem betätigbarem Ventil in eine Freigabestellung überführen, in welcher das Druck-Medium frei zwischen den beiden Teil-Gehäuseräumen fließen kann. Diese bekannte Druckfeder findet Anwendung bei der Rückenlehnenverstellung von Fahrzeugsitzen. Will der Benutzer bei nach hinten geneigter Rückenlehne diese in eine aufrechtere Position bringen, so betätigt er zunächst das betätigbare Ventil. Solange der Rücken des Benutzers keinen Druck auf die Rückenlehne ausübt, verbleibt das Lastschaltventil in der Blockierstellung, sodass auch bei ausgelöstem betätigbaren Ventil die Rückenlehne in der ursprünglich geneigten Position verbleibt. Erst wenn der Benutzer sich soweit zurücklehnt, dass er über die Rückenlehne einen Steuerdruck erzeugt, welcher das Lastschaltventil in die Freigabestellung überführt, ist sowohl das betätigbare Ventil als auch das Lastschaltventil offen, die Betätigungs-Überströmverbindung also frei. Erst dann folgt die Rückenlehne dem Rücken des Benutzers in eine aufrechtere Position, wenn der Benutzer sich selber aufrichtet. Dieses Konzept zur Umstellung der Rückenlehne in die aufrechtere Position vermeidet zwar, dass die Druckfeder nach einer Betätigung des betätigbaren Ventils unkontrolliert ausschiebt und gegen den Rücken des Benutzers stößt, ist aber kompliziert und vor allem wenig intuitiv. Nach einer Betätigung des betätigbaren Ventils muss der Benutzer sich erst stärker zurücklehnen, obwohl er doch in eine aufrechtere Position gelangen will.

Aus der US 4,844,392 ist eine längenverstellbare Gasfeder bekannt, die ein zur Betätigung der Kolbenstange vorgesehenes Ventil mit einem Dämpfungs-Ventil aufweist, wobei das Dämpfungs-Ventil beim Einfahren der Kolbenstange in das Gehäuse und beim Ausfahren der Kolbenstange aus dem Gehäuse jeweils unterschiedlich drosselt.

Die EP 1 124 077 A1 offenbart eine Gasfeder mit einer Ventil-Einrichtung, die mindestens zwei Überströmkanäle mit unterschiedlicher Drosselwirkung aufweist, wobei diese bei unterschiedlich weitem Einschieben eines Ventilstiftes gemeinsam oder nacheinander zur Wirkung kommen.

Aus der JP 5 248 469 A ist eine Kolben-Zylinder-Einheit zur Betätigung von Rückenlehnen bekannt, die in Ausschub- und in Einschubrichtung eine unterschiedliche Drossenwirkung aufweist.

Der Erfindung liegt die Aufgabe zugrunde, eine Druckfeder der eingangs genannten Art derart weiterzubilden, dass eine gleichzeitig komfortable und intuitive Längenverstellung der Druckfeder möglich ist.

Diese Aufgabe ist erfindungsgemäß gelöst durch die im Kennzeichnungsteil des Anspruchs 1 angegebenen Merkmale.

Kern der Erfindung ist das Vorsehen von mindestens zwei parallel geschalteten Überströmkanälen in der Betätigungs-Überströmverbindung. Für einen ersten Überströmkanal, in dem das Drosselelement vorgesehen ist, stellt somit der zweite Überströmkanal einen Bypass dar. Somit ist auch dann, wenn das Drosselelement in Drosselstellung vorliegt, bei ausgelöstem betätigbaren Ventil ein Überströmen von Druckmedium zwischen den Teil-Gehäuseräumen möglich. Bei von außen herbeiführbarer Überführung des Drosselelements in die Freigabestellung sind beide Überströmkanäle offen, sodass die Drosselung der Betätigungs-Überströmverbindung aufgehoben ist. Eine Betätigung des betätigbaren Ventils führt also auch dann, wenn das Drosselelement in Drosselstellung vorliegt, zu einer - wenn auch gedrosselten - Aufhebung der Blockierung der Druckfeder. Aufgrund der Drosselung ist ein unkontrolliertes Ausschieben der Kolbenstange verhindert. Es resultiert eine komfortable und gleichzeitig intuitive Längenverstellung der Druckfeder, wobei sich die Druckfeder mit einer geringen Anzahl von Komponenten realisieren lässt.

Ein Drosselelement nach Anspruch 2 ist kostengünstig herstellbar und kann aus verschleißarmem und trotzdem gut dichtendem Material gefertigt sein.

Eine Betätigung des Drosselelements gemäß Anspruch 3 ist einfach und erfordert keine mechanische Anlenkung des Drosselelements.

Eine Ausgestaltung des Drosselelements nach Anspruch 4 kann elegant in eine Druckfeder integriert werden und ist besonders bedienungsfreundlich.

Ein Kraftspeicher nach Anspruch 5 sowie ein Druck-Medium nach Anspruch 6 haben sich - je nach Einsatzgebiet - bewährt.

Eine weitere Aufgabe der Erfindung ist es, einen Sitz anzugeben, bei dem die Vorteile der erfindungsgemäßen Druckfeder besonders zum Tragen kommen.

Diese Aufgabe ist erfindungsgemäß gelöst durch einen Sitz gemäß Anspruch 7.

Beim erfindungsgemäßen Sitz wird vermieden, dass die Rückenlehne nach einem Auslösen des Ventilstifts durch Ausschieben der Kolbenstange unkontrolliert in eine aufgerichtete Position schnellt und dabei dem Sitzenden einen Stoß versetzt. Stattdessen erfolgt ein gedrosseltes und daher langsames Aufrichten der Rückenlehne. Wenn das Drosselelement zusätzlich in die Freigabestellung überführt wird, wird die Drosselung kontrolliert aufgehoben und eine schnellere Rückenlehnenverstellung ist möglich.

Ein Betätigungselement nach Anspruch 8 führt zu einem bequemen Auslösen des Ventilstifts.

Bei einer Anordnung der Druckfeder nach Anspruch 9 betätigt der Benutzer durch Druck gegen die Lehnfläche der Rückenlehne des Sitzes das Drosselelement. Bei ausgelöstem Ventilstift wird dadurch die Drosselung der Druckfeder aufgehoben und eine schnelle Verstellung der Rückenlehnenneigung ist möglich.

Die erfindungsgemäße Druckfeder kommt zum Beispiel bei Bürostühlen zum Einsatz. Alternativ kann sie zum Beispiel bei Fahrzeugsitzen wie Bussitzen, Zugsitzen oder Flugzeugsitzen zur Anwendung kommen. Ein anderes Anwendungsbeispiel ist ein Kinositz.

Weitere Merkmale, Vorteile und Einzelheiten der Erfindung ergeben sich aus der nachfolgenden Beschreibung eines Ausführungsbeispiels anhand der Zeichnung. In dieser zeigen:
- Fig. 1: eine Druckfeder im Längsschnitt;
- Fig. 2: eine schematische Darstellung eines Sitzes mit einer erfindungsgemäßen Druckfeder;
- Fig. 3: eine Ausschnittsvergrößerung aus Fig. 2, welche in Fig. 2 nicht sichtbare Details einer Ventilbetätigung der Druckfeder darstellt; und
- Fig. 4 bis 7: Momentaufnahmen eines Ausschnitts der Druckfeder im Bereich eines Kolbens von dieser, welche die Verlagerung eines Ventilstifts sowie eines Drosselelements bei der Betätigung des Ventils der Druckfeder darstellen.

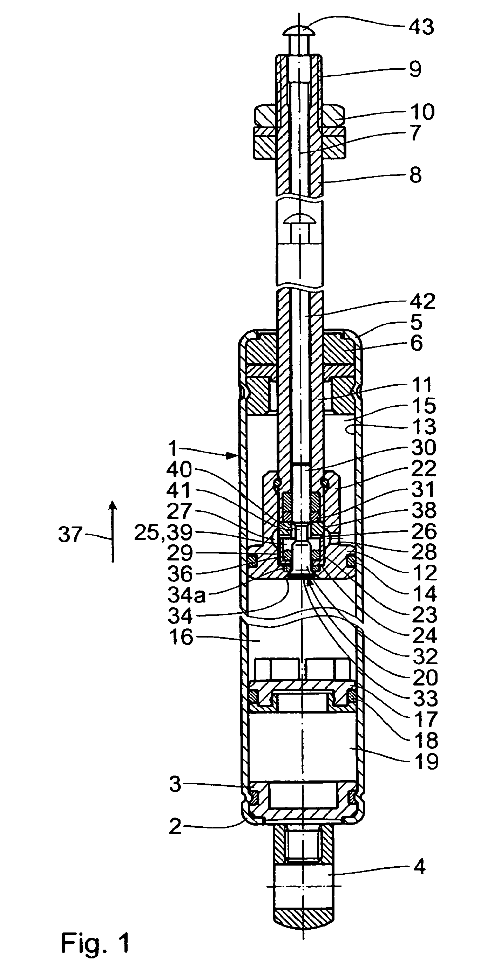

Die in Fig. 1 insgesamt dargestellte längenverstellbare, blockierbare Druck-Gasfeder weist ein im Wesentlichen zylindrisches, aus einem Rohr hergestelltes Gehäuse 1 auf, das an einem Ende 2 mittels eines Bodens 3 gasdicht verschlossen ist, an dem ein Befestigungselement 4 angebracht ist. Am anderen Ende 5 des Gehäuses 1 ist eine ringförmig ausgebildete Führungs- und Dichtungs-Einheit 6 flüssigkeitsdicht befestigt, die zur Führung und Abdichtung einer im Gehäuse 1 konzentrisch zu dessen Mittel-Längs-Achse 7 verschiebbar angeordneten Kolbenstange 8 dient. Am außerhalb des Gehäuses 1 befindlichen freien Ende 9 der Kolbenstange 8 ist ebenfalls ein Befestigungselement 10 vorgesehen.

Am im Gehäuse 1 befindlichen Ende 11 der Kolbenstange 8 ist ein Kolben 12 angebracht, der an einer Innenwand 13 des Gehäuses 1 geführt ist und gegenüber dieser mittels einer Dichtung 14 flüssigkeitsdicht abgedichtet ist. Der Kolben 12 teilt den Innenraum des Gehäuses 1 in einen zwischen Kolben 12 und Führungs- und Dichtungs-Einheit 6 befindlichen ersten Teil-Gehäuseraum 15 und einen hiervon abgewandten zweiten Teil-Gehäuseraum 16. Der zweite Teil-Gehäuseraum 16 wiederum wird durch einen Schiebekolben 17 begrenzt, der an der Innenwand 13 des Gehäuses 1 geführt verschiebbar und gegenüber dieser mittels einer Dichtung 18 gas- und flüssigkeitsdicht abgedichtet ist. Zwischen dem Schiebekolben 17 und dem Boden 3 wiederum ist eine als Kraftspeicher dienende Druckgas-Kammer 19 angeordnet, in der sich Gas unter Druck befindet. Die Teil-Gehäuseräume 15, 16 sind mit einer Flüssigkeit als Druck-Medium, beispielsweise Hydrauliköl, gefüllt.

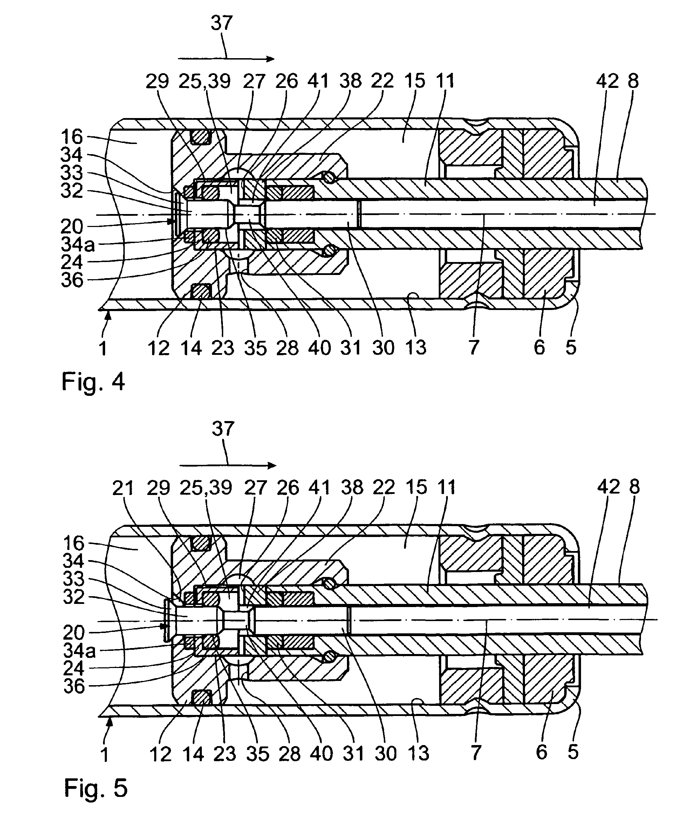

Im Kolben 12 ist ein Blockier-Ventil 20 als betätigbares Ventil ausgebildet, mit dem die Teil-Gehäuseräume 15, 16 miteinander verbunden beziehungsweise voneinander getrennt werden können. Bei miteinander verbundenen Teil-Gehäuseräumen 15, 16 liegt zwischen diesen eine Betätigungs-Überströmverbindung 21 vor (vergleiche zum Beispiel Fig. 5). In Fig. 1 ist das Blockier-Ventil 20 in Schließstellung dargestellt. Das Blockier-Ventil 20 umfasst einen Ventilkörper 22, der sich auf der der Dichtungs- und Führungs-Einheit 6 zugewandten Seite des Kolbens 12 befindet. Im hohl ausgebildeten Ventilkörper 22 ist ein hohlzylindrischer Überströmkörper 23 mit einem dem zweiten Teil-Gehäuseraum 16 zugewandten Ringboden 24 ausgebildet. Nach innen, also zur Mittel-Längs-Achse 7 hin, begrenzt der Überströmkörper 23 einen ersten Überströmkanal 25, der die Betätigungs-Überströmverbindung 21 hin zum ersten Teil-Gehäuseraum 15 fortsetzt. Hierzu weist der Überströmkörper 23 Stichkanäle 26 auf, die den Innenraum des Überströmkörpers 23 mit einem Ringraum 27 im Ventilkörper 22 verbinden. Der Ringraum 27 steht seinerseits über einen weiteren Stichkanal 28 im Ventilkörper 22 mit dem ersten Teil-Gehäuseraum 15 in Verbindung.

In der Außenwand des Ringbodens 24 sowie des weiteren Überströmkörpers 23 ist eine Bypassnut 29 ausgeführt, welche einen zweiten Überströmkanal darstellt, der ebenfalls als Teil der Überströmverbindung 21 parallel zum ersten Überströmkanal 25 geschaltet, also ein Bypass für diesen ist.

Auch die Bypassnut 29 verbindet wie der erste Überströmkanal 25 bei geöffneter Betätigungs-Überströmverbindung 21 den zweiten Teil-Gehäuseraum 16 über den Ringraum 27 und den Stichkanal 28 im Ventilkörper 22 mit dem ersten Teil-Gehäuseraum 15.

Der Überströmkörper 23 wird von einem koaxial zur Achse 7 angeordneten und verschiebbaren Ventilstift 30 durchsetzt, der in Fig. 1 in Schließstellung dargestellt ist. Der Ventilstift 30 ist zwischen dem Überströmkörper 23 und der hohl ausgebildeten Kolbenstange 8 mittels einer Dichtung 31 nach außen abgedichtet. Der Ventilstift 30 weist an seinem zum zweiten Teil-Gehäuseraum 16 weisenden Ende einen sich zweistufig konusförmig erweiternden Ventilteller 32 auf. Eine am freien Ende des Ventilstifts 30 angeordnete Konuswand 33 des Ventiltellers 32 mit größerem Durchmesser dient als Bewegungsbegrenzung des Ventilstifts 30 in Ausschubrichtung von diesem. Die Konuswand 33 arbeitet hierzu mit einer Gegenfläche 34 des Ventilkörpers 22 zusammen. In der in Fig. 1 gezeigten Schließstellung des Ventils 20 dichtet eine einen rechteckigen Querschnitt aufweisende Dichtung 34a die Konuswand 33 gegen den Ventilkörper 22 ab. Zwischen den beiden Konusflächen weist der Ventilstift 30 eine zylindrische Wand 35 auf. Diese dichtet gegen den Überströmkörper 23 über eine ein Drosselelement 36 darstellende Dichtung in der in Fig. 1 dargestellten Drosselstellung ab. Das Drosselelement 36 ist als O-Ring ausgebildet.

In der Drosselstellung liegt das Drosselelement 36 in Richtung auf den zweiten Teil-Gehäuseraum 16 zu am Ringboden 24 des Überströmkörpers 23 an. Auf diese Weise ist das Drosselelement 36 gegen eine weitere Verlagerung längs der Mittel-Längs-Achse 7 in Richtung auf den zweiten Teil-Gehäuseraum 16 zu gesichert. In Gegenrichtung, also in Pfeilrichtung des Pfeils 37, ist eine Verlagerungsbewegung des Drosselelements 36 innerhalb eines durch den Überströmkörper 23 und einen hieran angrenzenden Zwischenring 38 im Ventilkörper 22 gebildeten Überströmraum 39, der Teil des ersten Überströmkanals 25 ist, möglich, wie noch im Einzelnen dargestellt ist.

Der Ventilstift 30 weist im Bereich zwischen dem an der Dichtung 31 anliegenden Abschnitt und dem Ventilteller 32 einen verjüngten Abschnitt 40 auf, zwischen dem und den benachbarten Teilen, nämlich dem Überströmkörper 23 und dem Zwischenring 38, ein mit den Stichkanälen 26 kommunizierender Ringraum 41 gebildet ist.

In der hohl ausgebildeten Kolbenstange 8 ist eine in Richtung der Achse 7 verschiebbare, vom Ende 9 her durch Verschieben betätigbare Ventil-Betätigungs-Stange 42 angeordnet, die gegen den Ventilstift 30 anliegt. Das freie, aus der Kolbenstange 8 herausragende Ende der Ventil-Betätigungs-Stange 42 ist als Betätigungsknopf 43 ausgebildet.

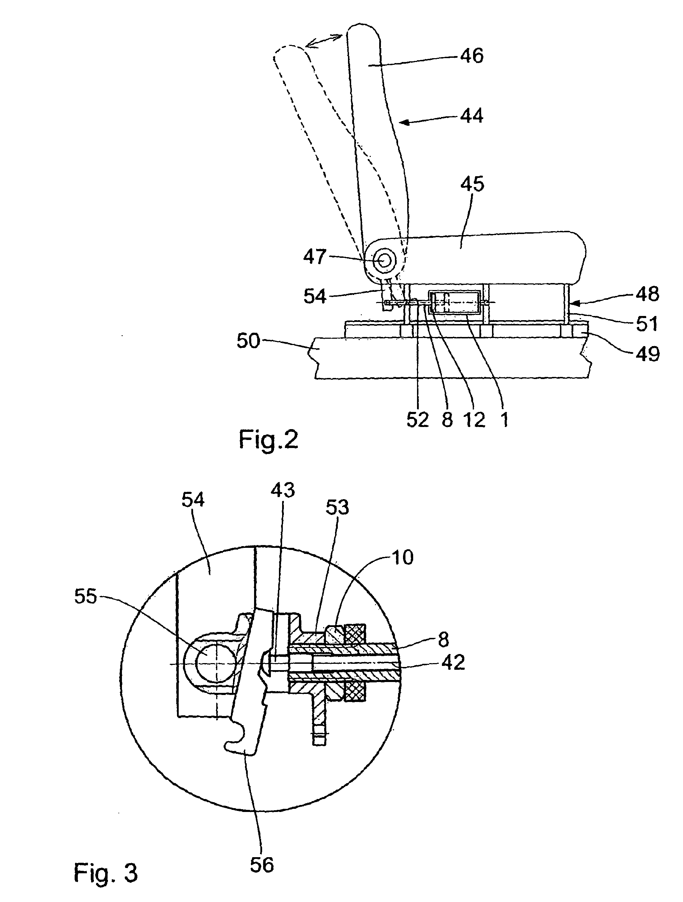

Fig. 2 zeigt schematisch die Anordnung der Druck-Gasfeder gemäß Fig. 1 an einem ebenfalls schematisch dargestellten Sitz 44. Dieser weist eine Sitzfläche 45 und eine Rückenlehne 46 auf. Die Rückenlehne 46 ist gegen die Sitzfläche 45 um ein Schwenkgelenk 47 verschwenkbar. Beim Sitz 44 handelt es sich um einen Fahrzeug-Sitz, der zum Beispiel in einem Bus, in einem Zug oder in einem Flugzeug zum Einsatz kommen kann.

Unterhalb der Sitzfläche 45 ist ein Tragrahmen 48 angeordnet, der die Sitzfläche 45 mit einer Tragschiene 49, die am Boden 50 festgelegt ist, verbindet. Der Tragrahmen 48 ist dabei in bekannter Weise so mit der Tragschiene 49 verbunden, dass der Sitz 44 zur Veränderung des Abstands zwischen hintereinander angeordneten Sitzen 44 verstellt werden kann. Der Tragrahmen 48 weist drei in Verstellrichtung hintereinander angeordnete, senkrechte Stützstreben 51 auf. Zwischen der mittleren Strebe 51 und der dem Schwenkgelenk 47 benachbart angeordneten, hinteren Stützstrebe 51 ist die Druck-Gasfeder gemäß Fig. 1 horizontal angeordnet. Hierbei ist das Befestigungselement 4 an der mittleren Stützstrebe 51 drehbar gelagert. Die Kolbenstange 8 ist an einer Führungsöffnung 52 in der hinteren Stützstrebe 51 axial geführt. Das freie Ende 9 der Kolbenstange 8 ist über das Befestigungselement 10 und einen Verbindungskörper 53 mit einer Verbindungsstange 54 verbunden, wobei zwischen dem Verbindungskörper 53 und der Verbindungsstange 54 ein Schwenkgelenk 55 mit zum Schwenkgelenk 47 paralleler Schwenkachse angeordnet ist. Die Verbindungsstange 54 stellt eine Verlängerung der Rückenlehne 46 über das Schwenkgelenk 47 hinaus dar und ist fest verbunden mit der Rückenlehne 46 ebenfalls um das Schwenkgelenk 47 schwenkbar.

Fig. 2 zeigt die Rückenlehne 46 durchgezogen in einer aufrechten Position, in der die Kolbenstange 8 der Druck-Gasfeder maximal aus dem Gehäuse 1 ausgeschoben ist. Gestrichelt zeigt Fig. 2 die Rückenlehne 46 in einer gegenüber der aufrechten Position stärker geneigten Position, in der die Rückenlehne 46 und damit auch die Verbindungsstange 54 um das Schwenkgelenk 47 verschwenkt sind und in der die Kolbenstange 8 und der mit dieser verbundene Kolben 12 in das Gehäuse 1 der Druck-Gasfeder eingeschoben sind.

Der Detaildarstellung der Fig. 3 im Bereich der Verbindung zwischen der Verbindungsstange 54 und der Kolbenstange 8 ist zu entnehmen, dass zur Betätigung des Betätigungsknopfes 43 ein hierzu komplementär geformter Anlage-Abschnitt eines Betätigungskörpers 56 vorgesehen ist, der verschwenkbar am Verbindungskörper 53 angelegt ist und, zum Beispiel über einen entsprechenden Bowdenzug, mit einem im Bereich der Unterseite der Sitzfläche 45 angeordneten Bedienhebel oder Druckknopf zur Betätigung der Ventil-Betätigungsstange 42 zusammenarbeitet.

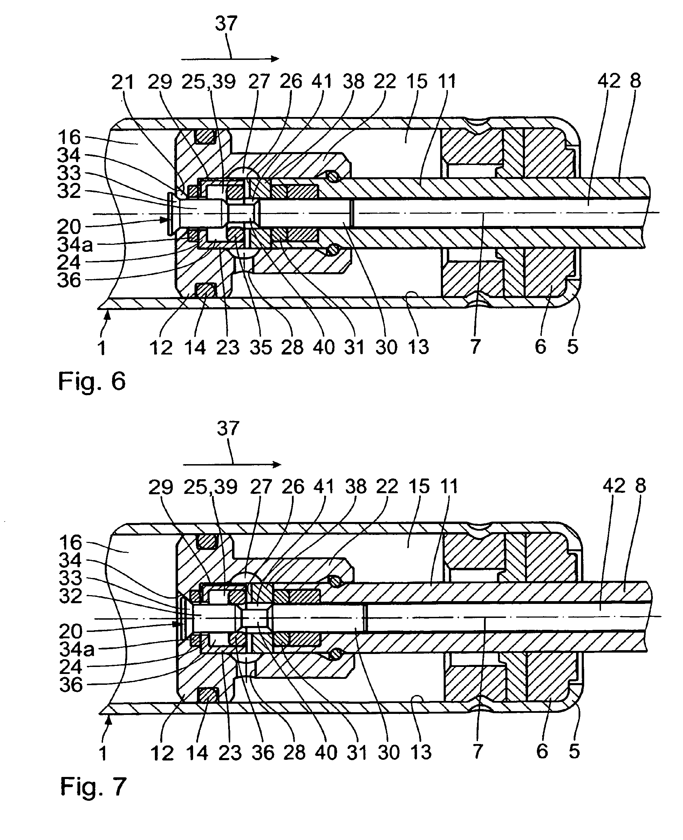

Anhand der Momentaufnahmen der Fig. 4 bis 7 während der Betätigung des Blockier-Ventils 20 wird nachfolgend die Arbeitsweise der Druck-Gasfeder nach Fig. 1 in der Einbausituation gemäß den Fig. 2 und 3 beschrieben:
Fig. 4 zeigt das Blockier-Ventil 20 entsprechend Fig. 1 mit dem Ventilstift 30 in Schließstellung und dem Drosselelement 36 in Drosselstellung. In dieser in den Fig. 1 und 4 gezeigten Stellung des Blockier-Ventils 20 ist bei entlasteter Gas-Druckfeder der Druck des Hydrauliköls im Teil-Gehäuseraum 15 höher als im Teil-Gehäuseraum 16. Dies resultiert aus der Tatsache, dass die dem Teil-Gehäuseraum 16 zugewandte Querschnittsfläche des Kolbens 12 größer ist als die dem Teil-Gehäuseraum 15 zugewandte Querschnittsfläche, die um den Querschnitt der Kolbenstange 8 vermindert ist. Dieser höhere Druck im ersten Teil-Gehäuseraum 15 drückt das Drosselelement 36 im ersten Überströmkanal 25 entgegen der Richtung des Pfeils 37 gegen den Ringboden 24. In Fig. 4 ist daher die Druck-Gasfeder einerseits nicht ausgelöst und andererseits wird der erste Überströmkanal 25 durch das Drosselelement 36 blockiert. Die Rückenlehne 46 ist dabei beispielsweise in der in Fig. 2 gestrichelt dargestellten, geneigten Position.
Fig. 5 zeigt den Ventilstift 30 in gegenüber der Schließstellung nach links verlagerter Auslösestellung, in die der Ventilstift 30 durch Betätigung des Betätigungsknopfes 43 über den Betätigungskörper 56 und den mit diesem verbundenen Bedienhebel gebracht wurde. In dieser Stellung des Ventilstifts 30 einerseits und dem Drosselelement 36 andererseits dichtet Letzteres immer noch den Überströmkörper 23 gegen die zylindrische Wand 35 des Ventilstifts 30 ab, sodass der erste Überströmkanal 25 weiterhin blockiert ist. Eine Strömungsverbindung zwischen den Teil-Gehäuseräumen 15, 16 liegt daher ausschließlich über die Bypassnut 29 vor. In Fig. 5 ist die Druck-Gasfeder daher gleichzeitig ausgelöst und maximal gedrosselt, sodass die entlastete Rückenlehne 46 langsam von einer stärker geneigten Position in eine weniger geneigte Position zurückkehrt.
   Will der Benutzer die Rückenlehne 46 von einer weniger geneigten in eine stärker geneigte Position bringen, so löst er einerseits das Blockier-Ventil 20 aus und übt andererseits mit dem Rücken zusätzlichen Druck auf die Lehnfläche der Rückenlehne 46 aus. Dieser Druck wird über das Schwenkgelenk 47, die Verbindungsstange 54, das Schwenkgelenk 55, den Verbindungskörper 53, das Befestigungselement 10, die Kolbenstange 8 und den Kolben 12 auf den zweiten Teil-Gehäuseraum 16 übertragen. Dies führt ab einem gewissen auf die Rückenlehne 46 ausgeübten Druck dazu, dass der Druck im zweiten Teil-Gehäuseraum 16 größer wird als im ersten Teil-Gehäuseraum 15. Sobald dieser Zustand erreicht ist, wird aufgrund dieser Druckdifferenz das Drosselelement 36 in Richtung des Pfeils 37 im Überströmraum 39 verschoben, bis das Drosselelement 36 die maximal im Überströmraum 39 nach rechts verlagerte Freigabestellung gemäß Fig. 6 erreicht. Während der Verlagerung des Drosselelements 36 strömt, solange das Drosselelement 36 noch gegen die zylindrische Wand 35 einerseits und nach außen gegen den Überströmkörper 23 andererseits abdichtet, Hydrauliköl zwischen der Gegenfläche 34 und der zylindrischen Wand 35 in den Überströmkörper 23 nach.
Fig. 6 zeigt das Drosselelement 36 in der Freigabestellung, in der dieses innerhalb des Überströmkörpers 23 in Richtung des Pfeils 37 maximal verlagert gegen den Zwischenring 38 anliegt. Der Ventilstift 30 ist auch in Fig. 6 noch in der Auslösestellung, das heißt der Benutzer betätigt weiterhin den Bedienhebel zur Betätigung des Betätigungsknopfes 43. In dieser Stellung des Ventilstifts 30 einerseits und des Drosselelements 36 andererseits ist ein Überströmen von Hydrauliköl zwischen dem ersten Teil-Gehäuseraum 15 und dem zweiten Teil-Gehäuseraum 16 sowohl durch den ersten Überströmkanal 25 als auch durch die Bypassnut 29 möglich. Der Kolben kann nun mit entsprechend geringerem Widerstand in das Gehäuse 1 eingeschoben werden, sodass eine komfortable Verstellung der Rückenlehne 46 in eine weiter geneigte Stellung möglich ist.

Wenn der Benutzer die Verstellung der Rückenlehne 46 anhalten will, gibt er in der gewünschten Position der Rückenlehne 46 den Bedienhebel, welcher den Betätigungsknopf 43 betätigt, frei, sodass das Blockier-Ventil 20 in die in Fig. 7 gezeigte Schließstellung kommt. In dieser Stellung, in der der Ventilstift 30 in der Schließstellung und das Drosselelement 36 noch in der Freigabestellung vorliegt, dichtet die Dichtung 34a die Konuswand 33 gegen den Ventilkörper 22 ab, sodass die Betätigungs-Überströmverbindung 21 gesperrt ist. Das Ventil 20 ist also in der Stellung nach Fig. 7 schon blockiert. Aufgrund des wie oben schon ausgeführt höheren Drucks im ersten Teil-Gehäuseraum 15 verglichen mit dem zweiten Teil-Gehäuseraum 16 wird im Anschluss an die in Fig. 7 gezeigte Momentaufnahme das Drosselelement 36 aus der Freigabestellung wieder selbsttätig in die Drosselstellung zurückverlagert. Hierbei fließt Hydrauliköl durch die Bypassnut 29. Am Ende dieses Verlagerungsvorganges ist wieder die in Fig. 4 gezeigte Stellung des Blockier-Ventils 20 erreicht.

## Patentansprüche

1. Längenverstellbare Druckfeder
- mit einem mit einem fließfähigen Druck-Medium gefüllten Gehäuse (1) mit einer Mittel-Längs-Achse (7),
- mit einer das Gehäuse (1) an einem ersten Ende (5) abschließenden Führungs- und Dichtungseinheit (6),
- mit einer abgedichtet durch die Führungs- und Dichtungseinheit (6) aus dem ersten Ende (5) des Gehäuses (1) herausgeführten, ein äußeres Ende (9) aufweisenden Kolbenstange (8),
- mit einem mit der Kolbenstange (8) verbundenen, im Gehäuse (1) abgedichtet geführten Kolben (12),
- mit einem einseitig vom Kolben (12) begrenzten und mit Druck-Medium gefüllten ersten Teil-Gehäuseraum (15),
- mit einem weiteren, mit dem ersten Teil-Gehäuseraum (15) verbindbaren, mit Druck-Medium gefüllten zweiten Teil-Gehäuseraum (16) und
- mit einem betätigbaren Ventil (20) zum Miteinanderverbinden der Teil-Gehäuseräume (15, 16) durch eine Betätigungs-Überströmverbindung (21), welches einen Ventilstift (30) aufweist, der von außerhalb des Gehäuses (1) in eine Auslösestellung, in der der Ventilstift (30) eine Freigabe der Betätigungs-Überströmverbindung (21) ermöglicht, und in eine Schließstellung, in der er die Betätigungs-Überströmverbindung (21) verschließt, bringbar ist, wobei
- die Betätigungs-Überströmverbindung (21) einen Überströmabschnitt mit mindestens zwei parallel geschalteten Überströmkanälen (25, 29) aufweist,
- wobei ein mit einem ersten (25) der Überströmkanäle (25, 29) zusammenarbeitendes Drosselelement (36) für die Betätigungs-Überströmverbindung (21) vorgesehen ist,
-- das von außerhalb des Gehäuses (1) in eine Freigabestellung, in der es in der Auslösestellung des Ventilstifts (30) den ersten Überströmkanal (25) freigibt, bringbar ist, und
-- das in eine Drosselstellung, in der es auch in der Auslösestellung des Ventilstifts (30) den ersten Überströmkanal (25) verschließt, bringbar ist,
- wobei mindestens ein weiterer (29) der Überströmkanäle (25, 29) derart ausgebildet ist, dass in der Drosselstellung des Drosselelements (36) bei ausgelöstem betätigbarem Ventil (20) ein gedrosseltes Überströmen durch den mindestens einen weiteren Überströmkanal (29) erfolgt, **dadurch gekennzeichnet, dass**
- das Drosselelement (36) als relativ zum Ventilstift (30) verschiebbares Dichtelement ausgeführt ist, das in Drosselstellung
-- nach innen gegen den Ventilstift (30) und
-- nach außen gegen einen Gehäuseraum-Abschnitt (23) abgedichtet ist, welcher eine Begrenzungswand sowohl für den ersten (25) als auch für den zweiten (29) Überströmkanal bildet.

2. Druckfeder nach Anspruch 1, **dadurch gekennzeichnet, dass** das Drosselelement (36) als verschiebbarer Dichtring, insbesondere als O-Ring, ausgebildet ist.

3. Druckfeder nach Anspruch 1 oder 2, **gekennzeichnet durch** eine Ausführung des Drosselelements (36) derart, dass dessen Betätigung **durch** eine von außerhalb des Gehäuses (1) herbeigeführte Druckänderung des Druck-Mediums in mindestens einem der Teil-Gehäuseräume (15, 16) erfolgt.

4. Druckfeder nach einem der Ansprüche 1 bis 3, **gekennzeichnet durch** eine Ausführung des Drosselelements (36) derart, dass es dann, wenn der Ventilstift (30) nach einer Ventilbetätigung in die Schließstellung zurückgekehrt ist, automatisch von der Freigabestellung in die Drosselstellung zurückkehrt.

5. Druckfeder nach einem der Ansprüche 1 bis 4, **dadurch gekennzeichnet, dass** ein Kraftspeicher (19) durch eine Druckgas-Kammer gebildet ist.

6. Druckfeder nach einem der Ansprüche 1 bis 5, **gekennzeichnet durch** Öl als Druck-Medium.

7. Sitz (44) mit einer Druckfeder nach einem der Ansprüche 1 bis 6, bei dem die Druckfeder eine Rückenlehne (46) des Sitzes (44) durch Ausschieben der Kolbenstange (8) aus dem Gehäuse (1) von einer stärker in eine weniger stark geneigte Position überführt.

8. Sitz nach Anspruch 7, **dadurch gekennzeichnet, dass** der Ventilstift (30) durch ein am Sitz (44) im Bereich einer Sitzfläche (45) angeordnetes Betätigungselement (56) betätigt werden kann.

9. Sitz nach Anspruch 7 oder 8, **gekennzeichnet durch** eine Anordnung der Druckfeder derart, dass bei betätigtem Ventil (20) das Drosselelement (36) **durch** Druck gegen die Lehnfläche der Rückenlehne (46) in die Freigabestellung bringbar ist.

## Claims

1. An adjustable-length compression spring, comprising
- a casing (1) with a central longitudinal axis (7), the casing (1) being filled with free-flowing pressure fluid;
- a guide and seal unit (6) which closes the casing (1) at a first end (5);
- a piston rod (8) which, through the guide and seal unit (6), is extended from, and sealed towards, the first end (5) of the casing (1), having an outer end (9);
- a piston (12) which is joined to the piston rod (8) and sealingly guided in the casing (1);
- a first sectional casing chamber (15) which is unilaterally defined by the piston (12) and filled with pressure fluid;
- a second sectional casing chamber (16) which is connectable to the first sectional casing chamber (15) and filled with pressure fluid; and
- an operating valve (20) for connection to each other of the sectional casing chambers (15, 16) by an actuation and overflow assembly (21), the valve (20) comprising a valve pin (30) which, from outside the casing (1), is movable into a tripped position, in which the valve pin (30) enables the actuation and overflow assembly (21) to be released, and into a shut-off position, in which the valve pin (30) shuts off the actuation and overflow assembly (21); wherein
- the actuation and overflow assembly (21) comprises an overflow portion with at least two overflow passages (25, 29) connected in parallel;
- wherein a throttle element (36) for the actuation and overflow assembly (21) is provided, cooperating with a first overflow passage (25) of the overflow passages (25, 29),
-- the throttle element (36), from outside the casing (1), being movable into the position of release, in which it releases the first overflow passage (25) with the valve pin (30) in a tripped position, and
-- the throttle element (36) being movable into the position of throttling, in which it shuts off the first overflow passage (25) with the valve pin (30) also in the tripped position;
- wherein at least one further overflow passage (29) of the overflow passages (25, 29) is designed for throttled flow through the at least one further overflow passage (29) to take place in the position of throttling of the throttle element (36) with the operating valve (20) tripped, **characterized in that**
- the throttle element (36) is a sealing element which is displaceable in relation to the valve pin (30), in the position of throttling being sealed
-- inwardly towards the valve pin (30); and
-- outwardly towards a casing-chamber portion (23) which forms a defining wall for the first (25) as well as the second (29) overflow passage.

2. A compression spring according to claim 1, **characterized in that** the throttle element (36) is a displaceable sealing ring, in particular an O-ring.

3. A compression spring according to claim 1 to 2, **characterized by** an embodiment of the throttle element (36) such that actuation thereof is effected by pressure modification, incited from outside, of the pressure fluid in at least one of the sectional casing chambers (15, 16).

4. A compression spring according to one of claims 1 to 3, **characterized by** an embodiment of the throttle element (36) for automatic return from the position of release into the position of throttling when the valve pin (30), after valve operation, is back in the shut-off position.

5. A compression spring according to one of claims 1 to 4, **characterized in that** an energy storing device (19) is a compressed-gas chamber.

6. A compression spring according to one of claims 1 to 5, **characterized by** oil as a pressure fluid.

7. A seat (44) comprising a compression spring according to one of claims 1 to 6, in which the compression spring transfers a backrest (46) of the seat (44) from a more inclined to a less inclined position by extension of the piston rod (8) out of the casing (1).

8. A seat according to claim 7, **characterized in that** the valve pin (30) can be operated by an operating member (56) which is disposed on the seat (44) in the vicinity of the seating area (45).

9. A seat according to claim 7 or 8, **characterized by** an arrangement of the compression spring such that, with the valve (20) operated, the throttle element (36) is movable into the position of release by pressure on the resting area of the backrest (46).

## Revendications

1. Ressort de compression de longueur variable, comportant
- un boîtier (1) présentant un axe longitudinal médian (7) et rempli d'un fluide sous pression capable de s'écouler,
- une unité de guidage et d'étanchéité (6) refermant le boîtier (1) à une première extrémité (5),
- une tige de piston (8) présentant une extrémité extérieure (9) et menée hors de la première extrémité (5) du boîtier (1) en étant étanchée par le dispositif de guidage et d'étanchéité (6),
- un piston (12) relié à la tige de piston (8) et guidé de façon étanche dans le boîtier (1),
- un premier compartiment partiel de boîtier (15) délimité sur un côté par le piston (12) et rempli d'un fluide sous pression,
- un second compartiment partiel de boîtier (16) susceptible d'être relié au premier compartiment partiel de boîtier (15) et rempli de fluide sous pression, et
- une valve actionnable (20) pour relier mutuellement des compartiments partiels de boîtier (15, 16) par une liaison d'actionnement à débordement (21) qui comprend une goupille de valve (30) qui est susceptible d'être amenée, depuis l'extérieur du boîtier (1), dans une position de déclenchement dans laquelle la goupille de valve (30) permet une libération de la liaison d'actionnement à débordement (21), et une position de fermeture dans laquelle elle referme la liaison d'actionnement à débordement (21),
dans lequel
- la liaison d'actionnement à débordement (21) comprend une portion de débordement comprenant au moins deux canaux de débordement (25, 29) branchés en parallèle,
- il est prévu un élément d'étranglement (36) destiné à la liaison d'actionnement à débordement (21) et coopérant avec un premier (25) des canaux de débordement (25, 29),
-- qui est susceptible d'être amené, depuis l'extérieur du boîtier (1), dans une position de libération dans laquelle il libère le premier canal de débordement (25) dans la position de déclenchement de la goupille de valve (30), et
-- qui est susceptible d'être amené dans une position d'étranglement dans laquelle il referme le premier canal de débordement (25) même dans la position de déclenchement,
- au moins un autre (29) des canaux de débordement (25, 29) est réalisé de telle sorte que dans la position d'étranglement de l'élément d'étranglement (36), la valve actionnable (20) étant déclenchée, un débordement étranglé s'effectue à travers ledit au moins un autre canal de débordement (29), **caractérisé en ce que**
- l'élément d'étranglement (36) est réalisé sous la forme d'un élément d'étanchéité mobile par rapport à la goupille de valve (30), qui, dans la position étranglement, est étanché
-- vers l'intérieur par rapport à la goupille de valve (30) et
-- vers l'extérieur par rapport à une portion de compartiment de boîtier (23), qui forme une paroi de délimitation aussi bien pour le premier canal de débordement (25) que pour le second canal de débordement (29).

2. Ressort de compression selon la revendication 1, **caractérisé en ce que** l'élément d'étranglement (36) est réalisé sous la forme d'un joint annulaire mobile, en particulier sous la forme d'un joint torique.

3. Ressort de compression selon la revendication 1 ou 2, **caractérisé par** une réalisation de l'élément d'étranglement (36) telle que son actionnement s'effectue par une modification de la pression provoquée de l'extérieur du boîtier (1) du fluide sous pression dans l'un au moins des compartiments partiels de boîtier (15, 16).

4. Ressort de compression selon l'une des revendications 1 à 3, **caractérisé par** une réalisation de l'élément d'étranglement (36) telle que lorsque la goupille de valve (30) est retournée dans la position de fermeture après un actionnement de la valve, ledit élément retourne automatiquement depuis la position de libération à la position d'étranglement.

5. Ressort de compression selon l'une des revendications 1 à 4, **caractérisé en ce qu'**un accumulateur de force (19) est formé par une chambre à gaz sous pression.

6. Ressort de compression selon l'une des revendications 1 à 5, **caractérisé par** de l'huile à titre de fluide sous pression.

7. Siège (44) comprenant un ressort de compression selon l'une des revendications 1 à 6, dans lequel le ressort de compression transfère un dossier (46) du siège (44) par déploiement de la tige de piston (8) hors du boîtier (1) depuis une position plus fortement inclinée jusque vers une position moins fortement inclinée.

8. Siège selon la revendication 7, **caractérisé en ce que** la goupille de valve (30) peut être actionnée par un élément d'actionnement (56) agencé sur le siège (44) dans la zone d'une surface d'assise (45).

9. Siège selon la revendication 7 ou 8, **caractérisé par** un agencement du ressort de compression tel que, la valve (20) étant actionnée, l'élément d'étranglement (36) est susceptible d'être amené dans la position de libération par une pression exercée contre de la surface d'utilisation du dossier (46).
